# DEMANDE DE BREVET EUROPEEN

(11) **EP 1 701 560 A2**
(43) Date de publication de la demande: **13.09.2006**
(21) Numéro de dépôt: 06116107.1
(22) Date de dépôt: 16.09.1999
(51) Int. Cl.: H04Q 7/22

(54) **Procédé de transmission d'informations système à une station mobile dans un système cellulaire de radiocommunications mobiles**

(62) Demande divisionnaire de: 99402270.5
(71) Demandeur: ALCATEL, 75008 Paris (FR)
(72) Inventeur: Roberts, Michaël, 92200 Neuilly s/ Seine (FR); Cruchant, Laurent, 75007 Paris (FR)
(74) Mandataire: El Manouni, Josiane

(57) **Abrégé**

Ce procédé de transmission d'informations système à une station mobile (MS) dans un système cellulaire de radiocommunications mobiles (MS, BSS, NSS), est essentiellement caractérisé en ce qu'au moins une partie desdites informations est transmise (4) à ladite station mobile dans un canal de signalisation dédié alloué à cette station mobile.

## Description

La présente invention concerne d'une manière générale les systèmes cellulaires de radiocommunications mobiles, c'est-à-dire les réseaux cellulaires de radiocommunications mobiles et les stations mobiles destinées à fonctionner dans ces réseaux.

Il est connu, dans les systèmes cellulaires de radiocommunications mobiles, de distinguer deux modes de fonctionnement pour les stations mobiles :
- le mode dédié, dans lequel une station mobile a à sa disposition un ou plusieurs canaux dédiés (qu'il s'agisse de canaux de trafic, utilisés pour transmettre des informations de trafic, ou de canaux de signalisation, utilisés pour transmettre des informations de signalisation, soit pendant une communication, soit en dehors d'une communication),
- le mode veille, dans lequel une station mobile n'a pas à sa disposition de canaux dédiés, mais doit néanmoins rester en contact avec le réseau, ce qu'elle fait par l'intermédiaire de canaux appelés canaux communs.

De manière connue, ces canaux communs comportent:
- des canaux de signalisation communs, permettant essentiellement la mise en oeuvre d'une procédure d'accès au réseau, nécessaire au passage du mode veille au mode dédié,
- des canaux de diffusion, permettant essentiellement de communiquer aux stations mobiles des informations dites ici informations système, nécessaires en particulier à la sélection, ou à la resélection, de cellule serveuse.

Egalement de manière connue, chaque cellule est associée à une fréquence particulière dite fréquence balise, sur laquelle sont diffusés lesdits canaux communs, et le processus de sélection ou de resélection de cellule serveuse par une station mobile en mode veille est brièvement le suivant.

La station mobile reçoit sur la fréquence balise de sa cellule serveuse des premières informations système constituées par une liste de fréquences balise associées à des cellules voisines de sa cellule serveuse. La station mobile recherche alors successivement chacune de ces fréquences balise, afin d'une part d'effectuer sur celle-ci des mesures radio, et d'autre part d'acquérir, après synchronisation, des deuxièmes informations système constituées par un certain nombre de paramètres permettant, par combinaison avec lesdits résultats de mesures radio, de déterminer si un critère de sélection est vérifié pour cette fréquence balise, puis, par comparaison aux résultats obtenus de la même façon pour les autres fréquences balise, de déterminer la cellule à resélectionner. Il est ensuite déterminé, grâce à des troisièmes informations système diffusées sur la fréquence balise de la cellule à resélectionner, si cette cellule appartient ou non à la même zone de localisation que la cellule serveuse courante. Si oui, la cellule à resélectionner devient la nouvelle cellule serveuse. Sinon, la station mobile en avise préalablement le réseau, par l'intermédiaire d'une procédure de mise à jour de localisation, afin de faire vérifier par le réseau le droit de l'utilisateur à accéder à la cellule ainsi déterminée. Dans le cas de réponse positive du réseau, cette cellule devient la nouvelle cellule serveuse.

A la mise en service d'une station mobile, aucune cellule serveuse n'ayant encore été sélectionnée, la station mobile sélectionne une cellule serveuse selon les mêmes principes, mais en explorant l'ensemble des fréquences balise, et en utilisant une procédure dite d'enregistrement pour la vérification des droits d'accès à la cellule sélectionnée.

En outre, en mode dédié, un processus similaire de resélection de cellule est mis en oeuvre, à ceci près que la station mobile ne fait que reporter les résultats desdites mesures radio au réseau, lequel détermine, sur cette base ainsi que sur la base d'autres critères, la cellule à resélectionner, c'est-à-dire vers laquelle un transfert de communication (ou "handover") est à effectuer.

On conçoit que l'acquisition et l'exploitation par les stations mobiles d'informations système ainsi diffusées correspondent à des opérations relativement complexes et coûteuses en temps de traitement. En particulier de telles opérations allongent le temps de sélection ou de resélection de cellule serveuse, et réduisent en outre le temps consacré par les stations mobiles à d'autres tâches, telles que notamment, en mode veille, la réception et le traitement des informations diffusées dans les canaux de signalisation communs, d'où également un allongement de la durée de la procédure d'accès au réseau.

Ces inconvénients deviennent en outre particulièrement sensibles dans les systèmes nécessitant une quantité d'informations système relativement grande pour pouvoir les décrire suffisamment vis-à-vis des stations mobiles, de manière à permettre à ces dernières d'agir efficacement, notamment pour la sélection ou la resélection d'une cellule serveuse appropriée.

De tels systèmes nécessitant une quantité relativement grande d'informations système sont notamment constitués par des systèmes comportant différents types de cellules dans lesquelles sont disponibles différents types de services, que ces cellules appartiennent à un même réseau serveur, ou à plusieurs réseaux serveurs possibles.

A titre d'exemple de systèmes comportant différents types de cellules dans lesquelles sont disponibles différents types de services, on peut citer les systèmes dans lesquels sont introduits, dans une infrastructure existante correspondant à un système donné, par exemple le système GSM (pour "Global System for Mobile Communications"), et dans une zone géographique donnée, des cellules supplémentaires, dédiées à un groupe d'utilisateurs particuliers, et permettant à ces utilisateurs de disposer de services spécifiques dans cette zone géographique.

Un autre exemple de tels systèmes est constitué par un système dans lequel sont introduits, dans une infrastructure existante, correspondant à un système tel qu'un système de deuxième génération (en particulier le système GSM), de nouvelles cellules, correspondant à un système tel qu'un système de troisième génération (en particulier le système UMTS, pour "Universal Mobile Telecommunication System" en anglais), en vue de l'introduction de nouveaux services, en particulier des services de transmission de données à haut débit. Un tel système comporte ainsi des cellules dans lesquelles ces nouveaux services sont disponibles, en l'occurrence des cellules UMTS ou des cellules GSM/UMTS, et des cellules dans lesquelles ces nouveaux services ne sont pas disponibles, en l'occurrence des cellules GSM.

Un autre exemple de tels systèmes est constitué par un système résultant de l'intégration, à un système cellulaire, tel que notamment le système GSM précité, d'un système dit sans fil (ou "cordless"), tel que notamment le système DECT (pour "Digital European Cordless telephone"), formé de mini-cellules de taille très inférieure à celles dudit système cellulaire, et dans lesquelles sont donc également disponibles des services spécifiques.

D'autres exemples sont bien entendu possibles. Un autre problème se pose en outre pour ces systèmes, qui est celui de la capacité limitée desdits canaux de diffusion, initialement dimensionnés pour des systèmes ne comportant qu'un seul type de cellules dans lesquelles sont disponibles les mêmes types de services, et donc nécessitant une quantité d'informations système relativement plus faible.

La présente invention a notamment pour but d'éviter les divers inconvénients mentionnés dans ce qui précède.

Un des objets de la présente invention consiste dans un procédé de transmission d'informations système à une station mobile dans un système cellulaire de radiocommunications mobiles, ce procédé étant essentiellement
caractérisé en ce qu'au moins une partie desdites informations est transmise à ladite station mobile dans un canal de signalisation dédié alloué à cette station mobile.

Le principe de l'invention consiste ainsi à transmettre des informations système aux stations mobiles, non plus par diffusion, dans des canaux communs, mais par transmission point à point, dans des canaux de signalisation dédiés. Ainsi, les stations mobiles peuvent acquérir et exploiter ces informations de manière beaucoup plus directe et beaucoup plus simple que dans les méthodes antérieures, et en évitant en outre les divers inconvénients mentionnés dans ce qui précède. Le mode de transmission suivant l'invention peut cependant, si nécessaire, être combiné au mode de transmission par diffusion (une partie desdites informations système étant alors transmise suivant chacun de ces modes).

En outre, le mode de transmission suivant l'invention autorise une personnalisation des informations transmises, notamment en fonction du profil des utilisateurs, que ne permet pas d'obtenir le mode de transmission par diffusion.

Un tel mode de transmission autorise par ailleurs toutes sortes d'évolutions, en fonction des reconfigurations du système, des changements de profil des utilisateurs, ...etc..

Avantageusement, suivant une autre caractéristique, lesdites informations sont transmises dans le cadre d'une procédure (ou protocole) de signalisation, déjà prévue pour le fonctionnement dudit système.

Ainsi, la présente invention ne nécessite aucune procédure de signalisation spécifique, et donc aucune modification substantielle du fonctionnement dudit système.

Avantageusement, ladite procédure est une procédure de gestion de mobilité, notamment une procédure de mise à jour de localisation.

Avantageusement, suivant une autre caractéristique, ladite au moins une partie desdites informations système n'est pas transmise systématiquement à ladite station mobile, mais seulement lorsque cela est estimé nécessaire.

Ainsi, une optimisation de l'utilisation des ressources de transmission peut être obtenue avec la présente invention (que ne permet pas non plus d'obtenir le mode de transmission par diffusion), en transmettant lesdites informations seulement lorsque cela est estimé nécessaire, par exemple seulement en cas de mise à jour desdites informations.

La présente invention a également pour objet une station mobile, et une entité pour système cellulaire de radiocommunications mobiles (notamment BSS pour "Base Station Subsystem") pour la mise en oeuvre d'un tel procédé.

D'autres objets et caractéristiques de la présente invention apparaîtront à la lecture de la description suivante d'un exemple de réalisation, ladite description étant faite en relation avec les dessins ci-annexés dans lesquels:
- la figure 1 est un schéma destiné à rappeler l'architecture générale d'un système cellulaire de radiocommunications mobiles,
- la figure 2 est un diagramme destiné à illustrer un exemple de procédé suivant l'invention,
- la figure 3 est un schéma destiné à illustrer le type de moyens à prévoir dans une station mobile, pour la mise en oeuvre d'un procédé suivant l'invention,
- la figure 4 est un schéma destiné à illustrer le type de moyens à prévoir, dans une entité de système cellulaire de radiocommunications mobiles (notamment BSS pour "Base Station Subsystem"), pour la mise en oeuvre d'un procédé suivant l'invention.

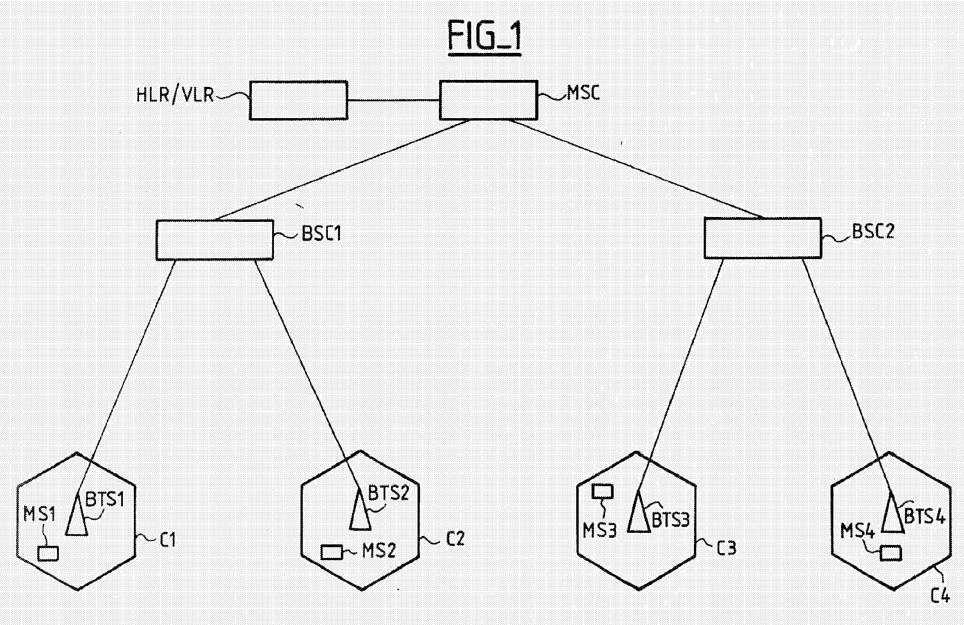

Un système cellulaire de radiocommunications mobiles comporte essentiellement, comme illustré sur la figure 1 :
- un ensemble de stations de base (ou BTS, pour "Base Transceiver Station" en anglais), telles que celles notées BTS0, BTS1, BTS2, BTS3 et BTS4, chacune de ces stations de base étant, dans l'exemple illustré, affectée à une cellule (notée respectivement C1, C2, C3, et C4), et ces stations de base étant en relation, via une interface radio, avec des stations mobiles, telles que MS1, MS2, MS3, MS4,
- un ensemble de contrôleurs de stations de base (ou BSC, pour "Base Station Controller" en anglais), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C1 et C2, et le contrôleur de stations de base BSC2 contrôlant dans cet exemple les cellules C3 et C4,
- un ensemble de centres de commutation mobile, appelés aussi MSC (pour "Mobile Switching Center" en anglais), dont un seul est illustré sur la figure, chacun de ces MSC contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2,
- des bases de données telles que HLR (pour "Home Location Register") ou VLR (pour "Visitors Location Register"), avec lesquelles les MSC sont en relation, et permettant notamment de gérer les données d'abonnement et la mobilité des utilisateurs.

L'ensemble formé par les BTS et BSC est aussi appelé BSS (pour "Base Station Subsystem" en anglais).

L'ensemble formé par les MSC, HLR et VLR est aussi appelé NSS (pour "Network and Switching Subsystem")

Les différents MSC sont en outre, d'une manière non illustrée spécifiquement, en relation avec des réseaux extérieurs tels que notamment les réseaux PSTN (pour "Public Switched Telephone Network") ou ISDN (pour "Integrated Services Digital Network").

Pour une description complète des systèmes cellulaires tels que notamment le système GSM (pour "Global System for Mobile communications"), on pourra se référer par exemple au livre de M. MOULY et M.B. PAUTET, intitulé "The GSM System for Mobile Communications" (Palaiseau, France, 1992, ISBN:2-9507190-07-7).

Dans un tel système, la présente invention a pour objet un procédé de transmission d'informations système à une station mobile.

Suivant l'invention, au moins une partie desdites informations est transmise à ladite station mobile dans un canal de signalisation dédié alloué à cette station mobile.

Avantageusement, lesdites informations sont transmises dans le cadre d'une procédure, ou protocole, de signalisation, déjà prévue pour le fonctionnement dudit système. Avantageusement ladite procédure est une procédure de gestion de mobilité, notamment une procédure de mise à jour de localisation.

A titre d'exemple, dans un système cellulaire tel que le système GSM, lesdites informations peuvent ainsi être transmises dans un canal de signalisation dédié appelé SDCCH (pour "Stand alone Dedicated Control Channel"), utilisé pour transmettre des informations de signalisation en dehors d'une communication, par exemple au cours de procédures de gestion de mobilité, ou lors de phases d'établissement ou de relâchement d'appels.

Lesdites informations pourraient aussi, bien que cela soit moins avantageux, être transmises dans des canaux de signalisation dédiés tels que, pour le système GSM par exemple, les canaux SACCH (pour "Slow Associated Control Channel"), ou FACCH (pour "Fast Associated Control Channel"), utilisés pour transmettre des informations de signalisation au cours d'une communication.

Avantageusement, lesdites informations ne sont pas transmises systématiquement à ladite station mobile, mais seulement lorsque cela est estimé nécessaire, par exemple seulement en cas de mise à jour desdites informations.

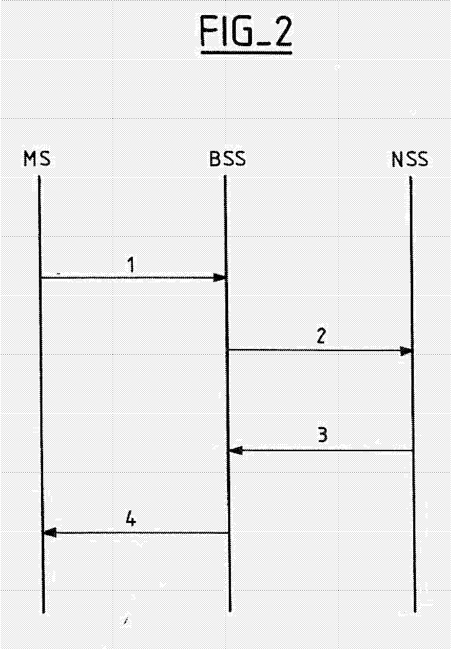

La figure 2 est un diagramme destiné à illustrer un exemple de procédé suivant l'invention, correspondant notamment au cas où lesdites informations sont transmises dans le cadre d'une procédure de mise à jour de localisation.

Le diagramme illustré sur la figure 2 comporte une première étape 1 au cours de laquelle une station mobile MS transmet à l'entité BSS des informations de signalisation, sous forme de requête dans cet exemple de procédure.

Au cours d'une deuxième étape 2 l'entité BSS retransmet à l'entité NSS des informations de signalisation correspondantes.

L'entité NSS détermine les informations système à transmettre à la station mobile, notamment en fonction des données d'abonnement (ou profil) de l'utilisateur, et en fonction de la localisation actuelle de cet utilisateur. Le type d'informations à transmettre, et la façon plus particulière dont l'entité NSS détermine ces informations, ne constituent pas en eux-mêmes l'objet de la présente invention, ce dernier résidant, comme déjà expliqué, dans leur mode de transmission.

Au cours d'une troisième étape 3 l'entité NSS transmet à l'entité BSS, en réponse à ladite requête, des informations de signalisation contenant lesdites informations système à transmettre à la station mobile.

Au cours d'une quatrième étape 4 l'entité BSS retransmet à la station mobile MS des informations de signalisation correspondantes, contenant lesdites informations système.

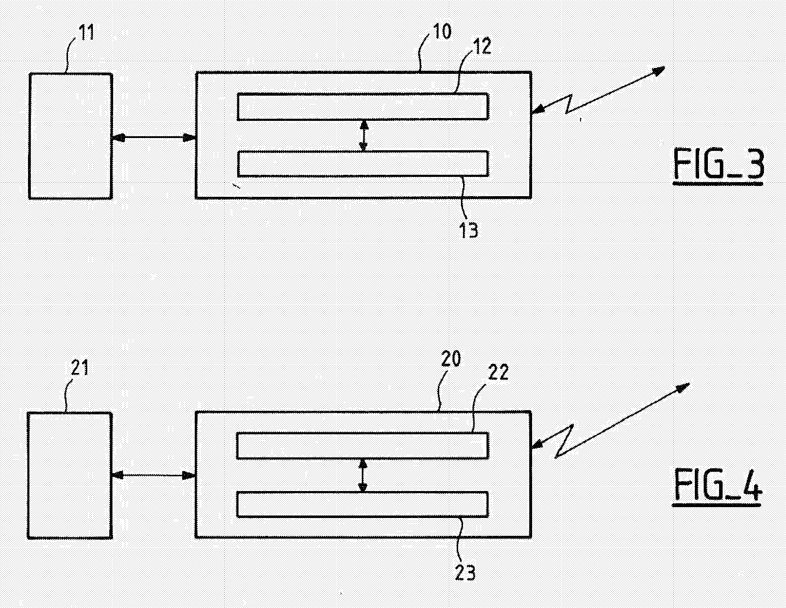

La figure 3 est un schéma destiné à illustrer le type de moyens à prévoir dans une station mobile, dans un système suivant l'invention.

Comme rappelé sur la figure 3, de manière connue, une station mobile comporte des moyens 10 dits d'interface air, permettant:
- d'une part de mettre des informations issues de moyens d'interface homme-machine 11, dans une forme admissible pour leur transmission sur l'interface-air,
- d'autre part de restituer des informations reçues sur l'interface-air, pour transmission auxdits moyens d'interface homme-machine 11.

Les moyens 10 d'interface-air comportent eux-mêmes, de manière connue, des moyens d'émission-réception 12, incluant des fonctions de traitement en bande de base et des fonctions radioélectriques, et des moyens de commande 13.

Lesdits moyens de commande 13 permettent notamment d'émettre et de recevoir les différents messages de signalisation échangés entre station mobile et réseau, dans les différentes procédures, ou protocoles, prévus pour le fonctionnement dans ce réseau.

Suivant l'invention, lesdits moyens de commande 13 comportent des moyens pour recevoir, sur un canal de signalisation dédié, alloué à cette station mobile, au moins une partie desdites informations système communiquées à la station mobile.

Avantageusement, lesdites informations sont transmises au cours d'une procédure, ou protocole, de signalisation, déjà prévue pour le fonctionnement dudit système, notamment une procédure de gestion de mobilité, en particulier une procédure de mise à jour de localisation.

De telles procédures étant bien connues de l'homme du métier, et la réalisation particulière de tels moyens ne présentant pas non plus de difficulté particulière pour l'homme du métier, de tels moyens ne nécessitent pas d'être décrits ici de manière plus détaillée que par leur fonction.

La figure 4 est un schéma destiné à illustrer le type de moyens à prévoir, dans une entité de réseau cellulaire de radiocommunications mobiles (notamment BSS pour "Base Station Subsystem"), dans un système suivant l'invention.

Comme rappelé sur la figure 4, de manière connue une entité telle que l'entité BSS comporte des moyens 20 dits d'interface-air permettant:
- d'une part de mettre des informations issues d'une entité 21 dite de niveau supérieur du système considéré (notamment NSS, pour "Network and Switching Subsystem"), dans une forme admissible pour leur transmission sur l'interface-air,
- d'autre part de restituer des informations reçues sur l'interface-air, pour transmission à ladite entité de niveau supérieur 21.

De même que décrit précédemment pour la station mobile, les moyens 20 d'interface-air comportent eux-mêmes classiquement des moyens d'émission-réception 22, incluant des fonction de traitement en bande de base et des fonctions radioélectriques, et des moyens de commande 23.

Lesdits moyens de commande 23 permettent notamment d'émettre et de recevoir les différents messages de signalisation échangés entre station mobile et réseau, dans les différentes procédures, ou protocoles, prévus pour le fonctionnement dans ce réseau.

Suivant l'invention, lesdits moyens de commande 23 comportent des moyens pour émettre, dans un canal de signalisation dédié, alloué à une station mobile, au moins une partie desdites informations système communiquées à la station mobile.

Avantageusement, lesdites informations sont transmises au cours d'une procédure, ou protocole, de signalisation, déjà prévue pour le fonctionnement dudit système, notamment une procédure de gestion de mobilité, en particulier une procédure de mise à jour de localisation.

De même, de telles procédures étant bien connues de l'homme du métier, et la réalisation particulière de tels moyens ne présentant pas non plus de difficulté particulière pour l'homme du métier, de tels moyens ne nécessitent pas non plus d'être décrits ici de manière plus détaillée que par leur fonction.

## Revendications

1. Procédé de transmission d'informations système à une station mobile (MS) dans un système cellulaire de radiocommunications mobiles (MS, BSS, NSS), ledit système comportant différents types de cellules dans lesquelles sont disponibles différents types de services, procédé **caractérisé en ce qu'**au moins une partie desdites informations est transmise (4) à ladite station mobile dans un canal de signalisation dédié alloué à cette station mobile, dans le cadre d'une procédure de gestion de mobilité.

2. Procédé selon la revendication 1, dans lequel ladite procédure de gestion de mobilité est une procédure de mise à jour de localisation.

3. Procédé selon l'une des revendications 1 et 2, dans lequel ladite au moins une partie desdites informations n'est pas transmise systématiquement à ladite station mobile, mais seulement lorsque cela est estimé nécessaire, notamment seulement en cas de mise à jour desdites informations.

4. Procédé selon l'une des revendications 1 à 3, dans lequel lesdites informations transmises sont personnalisées en fonction du profil de l'utilisateur.

5. Station mobile pour la mise en oeuvre d'un procédé selon l'une des revendications 1 à 4, **caractérisée en ce qu'**elle comporte des moyens (13) pour recevoir lesdites informations sur un canal de signalisation dédié, alloué à cette station mobile, dans le cadre d'une procédure de gestion de mobilité.

6. Entité pour réseau cellulaire de radiocommunications mobiles, pour la mise en oeuvre d'un procédé selon l'une des revendications 1 à 4, **caractérisée en ce qu'**elle comporte des moyens (23) pour émettre lesdites informations sur un canal de signalisation dédié, alloué à cette station mobile, dans le cadre d'une procédure de gestion de mobilité.
